# EUROPEAN PATENT SPECIFICATION

(11) **EP 0 410 575 B1**
(45) Date of publication and mention of the grant of the patent: **11.01.1995**
(21) Application number: 90306722.1
(22) Date of filing: 20.06.1990
(51) Int. Cl.: G11B 11/10

(54) **Magneto optic recording medium with hydrogenated silicon carbide dielectric**
Magneto-optisches Aufzeichnungsmedium mit dielektrischer Schicht aus hydriertem Siliziumkarbid
Support d'enregistrement magnéto-optique avec une couche diélectrique en carbure de silicium hydrogéné

(30) Priority: 28.07.1989 US 386144
(43) Date of publication of application: 30.01.1991
(73) Proprietor: MINNESOTA MINING AND MANUFACTURING COMPANY, St. Paul, Minnesota 55133-3427 (US)
(72) Inventor: Funkenbusch, Arnold W., c/o Minnesota Mining and, St. Paul, Minnesota 55133-3427 (US); Grove, Steven L., c/o Minnesota Mining and, St. Paul, Minnesota 55133-3427 (US)
(74) Representative: Baillie, Iain Cameron

(56) References cited:
- EP-A- 0 220 993
- EP-A- 0 327 257
- GB-A- 2 165 264
- 1989 DIGESTS OF INTERMAG '89 INTERNATIONAL MAGNETICS CONFERENCE 31 March 1989, MAYFLOWER HOTEL WASHINGTON DC, USA, page HQ-7 MISAKI et al.: "Hydrogen-Containing SiCN Protective Films for Magneto-optical Media"

## Description

This invention relates to magneto optic recording media which employ materials to protect a rare earth-transition metal recording material from oxidation or corrosion, enhance signal to noise ratio, act as a thermal barrier, or for other purposes. The invention also relates to methods for the production of such media.

Magneto optic recording media are also known by several other names: thermomagnetic media, beam addressable files, and photo-magnetic memories. All of these terms apply to a storage medium or memory element which responds to radiant energy permitting the use of such energy sources as laser beams for both recording and interrogation. Such media modify the character of an incident polarized light beam so that the modification can be detected by an electronic device such as a photodiode.

This modification is usually a manifestation of either the Faraday effect or the Kerr effect on polarized light. The Faraday effect is the rotation of the polarization plane of polarized light which passes through certain magnetized media. The Kerr effect is the rotation of the plane of polarization of a light beam when it is reflected as at the surface of certain magnetized media.

Magneto optic recording media have several advantages over known magnetic recording media:
1. No contact between the medium and a recording head, thus eliminating a source of wear;
2. Using a pulsed laser beam as the writing means, very high density data storage is possible; and
3. With a protective layer on top of a magneto optic layer, the medium is affected less by dust than magnetic media.

In magneto optic recording, data is written into a medium having a preferentially directed remanent magnetization by exposing a localized area (spot or bit) on the recording medium to an electromagnetic or other energy source of sufficient intensity to heat the recording medium above its Curie or compensation point temperature and simultaneously biasing the medium with a magnetic field. Preferably, the energy source is a laser which produces a monochromatic output beam. The magnetic field required to reverse the magnetization of the recording medium varies with the temperature to which the recording medium is brought. Generally speaking for a given material, the higher the temperature, the smaller the required magnetic field coercive force.

The write or record operation for both Curie point and compensation point writing is as follows:
1. The medium is initially in a randomly magnetized state. A domain will herein refer to the smallest stable magnetizable region; although in common usage, a domain is a uniformly magnetized region of any size. A selected area of the medium may be magnetized by exposing it to a continous energy beam and a small magnetic bias field normal to the surface of the medium.
2. A small magnetic bias field oriented perpendicular to the surface or plane of the medium, but oppositely directed to the magnetic field applied earlier is applied over the entire thin film medium.
3. With the biasing field in place, a light beam from a radiant energy source such as a laser beam is directed toward a selected location or bit on the medium where it causes localized heating of the medium to a temperature at or above the Curie and/or compensation temperature. When the laser beam is removed, the bit cools in the presence of the biasing magnetic field and has its magnetization switched to that direction. The medium, in effect, has a magnetic switching field which is temperature dependent. The magnetic biasing field applied to the irradiated bit selectively switches the bit magnetization, with the bit momentarily near its Curie and/or compensation temperature under the influence of the laser. The momentary temperature rise reduces the bit coercive force.

In the write operation, the write laser beam is focused to the desired diameter (e.g. 1.0 micrometer) onto the surface of the recording medium by an objective lens.

The memory element or recorded bit is interrogated, or read, nondestructively by passing a low-power (e.g. 1-3 mW) beam of polarized light (e.g. a laser beam) through the bit storage site for a sufficiently short time so as not to heat the medium to change its magnetic state. The read laser beam is normally shaped to a circular cross section by a prism, polarized and focused to the same diameter as the write beam onto the recording medium by a lens. When the read beam has passed through the recorded spot, it is sent through an optical analyzer, and then a detector such as a photodiode, for detection of any change or lack of change in the polarization.

A change in orientation of polarization of the light is caused by the magneto-optical properties of the material in the bit or site. Thus, the Kerr effect, Faraday effect, or a combination of these two, is used to effect the change in the plane of light polarization. The plane of polarization of the transmitted or reflected light beam is rotated through the characteristic rotation angle ϑ. For upward bit magnetization, it rotates ϑ degrees and for downward magnetization -ϑ degrees. The recorded data, usually in digital form represented by logic values of 1 or 0 depending on the direction of bit magnetization, are detected by reading the change in the intensity of light passing through or reflected from the individual bits, the intensity being responsive to the quantity of light which is rotated and the rotation angle.

It was previously believed that the signal-to-noise ratio (SNR) or carrier-to-noise ratio (CNR) of an erasable magneto optic medium is proportional to ϑxR^{1/2} where ϑ is the angle of rotation and R is the reflectivity of the medium. Presently, the relationship between CNR and the parameters of a fully constructed magneto optic medium is not well understood. The process of optimizing media construction appears to be more complicated than simply optimizing ϑxR^{1/2}.

Forty-five decibels in a 30 kHz band width is generally considered the minimum CNR acceptable for direct read after write (DRAW) media. The speed at which the bits can be interrogated and the reliability with which the data can be read depends upon the magnitude of the magneto optical properties, such as the angle of rotation, and upon the ability of the interrogation system to detect these properties. For purposes of this discussion, the noise floor or noise level is measured at the average noise level.

The main parameters that characterize a magneto optic material are the angle of rotation, the coercive force, the Curie temperature and the compensation point temperature. The medium is generally comprised of a single layer or multiple layer system where at least one of the layers is a thin film metal alloy composition. Binary and ternary compositions are particularly suitable for amorphous metal alloy formation. Suitable examples would be rare earth-transition metal (RE-TM) compositions, such as: gadolinium-cobalt (Gd-Co), gadolinium-iron (Gd-Fe), terbium-iron (Tb-Fe), dysprosium-iron (Dy-Fe), Gd-Tb-Fe, Tb-Dy-Fe, Tb-Fe-Co, terbium-iron-chromium (Tb-Fe-Cr), gadolinium-iron-bismuth (Gd-Fe-Bi), gadolinium-iron-tin (Gd-Fe-Sn), Gd-Fe-Co, Gd-Co-Bi, and Gd-Dy-Fe. Such alloys are disclosed in, inter alia, EP-A-327,257 and GB-A-2,165,264.

Many of the elements which are suitable for the rare earth-transition metal alloy layer react strongly with oxygen and other elements which may be present in the environment in which the media are used. Furthermore, the substrate upon which the alloy layer is deposited may itself contain impurities which react with the alloy layer. Thus, so-called "dielectric" films are deposited on one or both sides of the RE-TM thin film to protect it. To be effective, such films must not themselves react with the rare earth-transition metal layer or any other layer, must offer chemical and physical resistance to degradation by heat, humidity, and corrosive chemicals, and must be transparent at the wavelengths used for reading and writing of data (typically about 820 or 830 nanometres for a laser diode, or approximately 632.8 nanometres for a helium-neon laser, although other wavelengths may be used). A material is "transparent" for the purposes of this discussion when it absorbs less than about 20 percent of the intensity of an incident light beam at a particular wavelength.

Presently used dielectric films include silicon suboxide (SiO_{y}, y<2 - see GB-A-2,165,264 (supra)), titaniun dioxide. silicon dioxide, cerium oxide, aluminum oxide, and aluminum nitride. Most of these materials contain oxygen, which can react with the rare earth element in the magnetizable layer and thereby degrade media performance. Sputtering targets of these materials have very low electrical conductivity. This prevents the use of DC magnetron sputtering to deposit them on the other layers of a complete magneto optic medium. Instead, radio frequency (RF) sputtering, evaporation deposition, or reactive sputtering deposition, can be used.

GB-A-2,165,264 discloses, in a Comparative Example, a magneto-optical recording medium comprising a glass substrate and an amorphous magnetizable layer of GdTbFe having on one side thereof a silicon carbide dielectric layer. The silicon carbide dielectric layer is formed by high frequency sputtering in an argon atmosphere, using a silicon carbide target.

EP-A-220,993 relates to electrophotographic printing apparatus and discloses an electrophotographic multi-layered printing drum for such an apparatus which is provided with a top layer of hydrogenated amorphous silicon carbide having atomic ratios C:(Si+C) and Si-bonded H/Si:C-bonded H/C in the range 0.17 to 0.45 and 0.3 to 1.0 respectively. The top layer is formed by a glow discharge CVD method.

1989 Digests of Intermag '89 International Magnetics Conference discloses magneto-optical media having protective films of hydrogenated SiCN.

EP-A-327,257, which forms part of the state of the art against the present invention by virtue of Article 54(3) EPC, discloses a magneto-optic recording medium comprising a substrate and an amorphous magnetizable rare earth-transition metal alloy layer having a transparent dielectric layer on at least one side, in which the dielectric layer comprises silicon carbide of formula SiCₓ, in which x is greater than 1.0. The dielectric layer is deposited by D.C. magnetron sputtering from a target composed of silicon carbide and carbon.

The invention provides a magneto-optic recording medium comprising a substrate, and an amorphous magnetizable rare earth-transition metal alloy layer having a transparent dielectric layer on at least one side, in which the dielectric layer comprises hydrogenated silicon carbide of the formula (SiCₓ)_{1-y}H_{y}, in which x is greater than 1, and y is greater than zero.

In another aspect the invention provides a method of making a magneto optic recording medium comprising a substrate, an amorphous magnetizable rare earth-transition metal alloy layer, and a transparent dielectric layer on at least one side of the rare earth-transition metal alloy layer, the method comprising the steps of:
(A) providing the substrate;
(B) depositing the amorphous magnetizable rare earth-transition metal alloy layer by any means known to yield a layer effective in producing a magneto optic effect;
(C) providing an electrically conductive sputtering target comprising silicon and carbon; and
(D) depositing, from the target provided, by DC magnetron sputtering, a dielectric layer comprising hydrogenated silicon carbide of the formula (SiCₓ)_{1-y}H_{y}, in which x is greater than 1.0 and y is greater than zero.

The term "dielectric" as applied to these materials does not necessarily imply that the layers are electrical dielectrics, i.e., that they have very high electrical resistivities. The term "dielectric" as used in this specification and the claims indicates films that serve the optical and protective purposes as films which are known in the art as "dielectric" films.

Many substrates can be used. They may be formed of any material which is nonmagnetic, dimensionally stable, minimizing radial displacement variations during recording and playback. Semiconductors, insulators, or metals can be used. Suitable substrates include glass, spinel, quartz, sapphire, aluminum oxide, metals such as aluminum and copper, and polymers such as polymethyl-methacrylate (PMMA) and polyester. Glass is preferred for applications requiring high dimensional stability, while polymers are preferred for mass production due to their comparatively lower cost.

The substrate is typically a disc. Common diameters include 8.9 centimeters (3.5 inches) and 13.3 centimeters (5.25 inches), although other sizes are used. Transparent substrates allow the construction of media in which the read and write light beams pass through the substrate before the recording layer, then onto an optional reflector layer, and back again to the recording layer after reflection. Such a medium is known as a substrate incident medium. When the optional reflector layer is between the substrate and the recording layer, the read and write beams will not be directed through the substrate. Such a medium is known as an air incident medium, although generally there is at least one layer between the recording medium and the air.

Further preferred embodiments are defined in the dependent claims.

When a magnetizable amorphous material is deposited on a reflective surface, it is known that the magneto optic rotation is increased because the Faraday effect is added to the Kerr effect. The former effect rotates the plane of polarization of the light as it passes back and forth through the magneto optic layer while the Kerr effect rotates it at the surface of the layer. The reflective surface may be a smooth, highly polished surface of the substrate itself, or it may be the surface of a separate reflecting layer deposited by techniques known in the art such as vacuum vapor deposition. The reflective surface or layer usually has a reflectivity greater than about 50 percent (preferably 70 percent) at the recording wavelength. Deposited reflecting layers usually are about 50 to 500 nanometres thick. Typical deposited reflective layers are copper, aluminum, or gold.

The recording medium thin film typically comprises an alloy of at least one rare earth element and at least one transition metal and usually is no more than 40 nanometres thick if a reflector is employed; if not, the film may need to be as thick as 200 nanometres to produce the same magneto optic effects, as the Faraday effect will not be present. If it is too thin, generally 5 nanometres or less, the magneto optic film may not absorb enough light in the write mode. Sufficient coercivity to create a stable memory should be about 39790 A/m (500 Oersteds (Oe)), but a range of 159160 to 1034540 A/m (2000 to 13,000 Oe) is generally used.

Oxidation of the magnetizable RE-TM layer is believed to be a major cause of loss of media performance. Any source of oxygen, such as water vapor, leaked into the sputtering chamber during preparation of the RE-TM layer, or any layer which will contact the RE-TM layer, is a major cause of oxidation.

A transparent layer can be deposited on one or both sides of the magnetizable amorphous film. When it is located between the reflecting layer and the magnetizable amorphous film, it is known as the intermediate layer. In this position, dielectric layers are preferred, as they are known to protect the alloy layer from reacting with the reflecting layer or any impurities in it. A dielectric layer also provides a thermal barrier, reducing heat conduction from the magnetizable amorphous film to the reflector layer, thereby reducing the laser power required to write data in the magnetizable amorphous film. The intermediate layer is preferably 0 to 300 nanometers thick. Such an intermediate layer should desirably have an index of refraction greater than about 1.2, preferably between 2.0 and 3.0. An intermediate layer with a high index of refraction allows the magneto optic rotation angle to be significantly increased by interference enhancement.

Interference enhancement may also occur when a second transparent layer is deposited on the other side of the magnetizable amorphous thin film. Such a layer will be called a barrier layer. Media having one interference layer (either an intermediate or barrier layer) plus the MO and reflective layers are referred to as trilayer media. Media having both an intermediate layer and a barrier layer are called quadrilaver media. When the barrier layer is a dielectric layer, it also is preferably characterized by an index of refraction greater than 1.2, although it need not be the exact same material as the intermediate layer. The index of refraction should not be so high, however, as to produce too much reflection from the interface of the barrier and substrate layers, if the barrier layer is located adjacent a transparent substrate on which the polarized light is first incident (substrate incident structure). The barrier layer is usually between about 30 and 200 nanometers thick, but a layer constructed according to this invention may for example be as little as 5 nanometers in thickness.

In cases where the dielectric layer is in between the recording film and the reflecting layer or surface and there is no barrier layer (trilayer construction), it is beneficial to add a transparent passivating layer over the recording film layer. Passivation is the change of a chemically active metal surface to a much less reactive state. The optional transparent passivating layer is basically the same as the previously described transparent dielectric barrier layer but thinner, typically up to about 10 nanometres thick. As in the case of the transparent dielectric layer on the other side of the MO film, the passivating layer must protect the recording film from oxidation or corrosion due to excessive heat, humidity, or chemical reaction with impurities. It need not obtain the same optical effects (e.g., ϑ enhancement) as the thicker barrier layer. It is possible to combine the functions of the barrier layer and the passivating layer into a single layer comprised of a transparent dielectric material, and selecting the thickness to provide interference enhancement. Such a layer is still known as a barrier layer.

Although the media of this invention are erasable, they may be used in the same applications as write-once or non-erasable media. A two-sided medium is also possible by combining two one-sided media through means known in the art. One may also groove the magneto optic recording media to aid in locating recording tracks.

The discussion above describes a magneto optic medium having a single rare earth-transition metal layer, but in some applications, such as certain "direct overwrite" media, two or more rare earth-transition metal layers may be used. The two RE-TM layers may be in direct contact with each other, or may be separated by a dielectric layer designed according to the principles applicable to barrier and passivating layers.

Preferred embodiments of the invention are described below by way of example only.

In the drawings:
Figure 1 is a graph of the index of refraction, as a function of incident light wavelength, of a hydrogenated silicon carbide dielectric film of this invention;
Figure 2 is a graph of the optical extinction coefficient, as a function of incident light wavelength, of the hydrogenated silicon carbide dielectric film of Figure 1;
Figure 3 is a graph of the index of refraction, as a function of incident light wavelength, of a non-hydrogenated silicon carbide dielectric film and
Figure 4 is a graph of the optical extinction coefficient, as a function of incident light wavelength, of the non-hydrogenated silicon carbide dielectric film of Figure 3.

The magneto optic amorphous thin films can be made by known thin film deposition techniques, such as sputtering, evaporation and splat cooling. One preferred process is cathodic sputtering. Typical known sputtering conditions for amorphous thin films are: initial vacuum less than 1.33 x 10⁻³ Pa (1x10⁻⁵ Torr); sputtering pressure of from 4.0 to 2.67 Pa (3 x 10⁻² to 2 x 10⁻² Torr); clearing the surface of a sputtering source of material by pre-sputtering; substrate temperature of 30 degrees to 100 degrees C; and a noble gas (usually argon) partial pressure.

In the cathodic sputtering process, gas ions bombard the solid alloy target cathode in the sputtering chamber, dislodging metal atoms by transferring the momentum of the accelerated ions to the metal atoms near the surface of the target. The substrate is placed at the anode, and the metal alloy atoms traverse the space between the anode and cathode to deposit on the substrate.

In the triode sputtering process, a thermionic cathode, known as an emitter, is added to the sputtering chamber between the anode and cathode. This allows the gas plasma to be maintained at much lower pressures than a direct current glow discharge, even in a magnetic field or maqnetron. Typically an argon plasma can be maintained at 0.53Pa to 0.080Pa (4x10⁻³ to 6x10⁻⁴ torr) gauge pressure. This process enables the sputtered atoms to strike the substrate at a higher energy than they would at a higher pressure since there are fewer argon ions in the space between the target and substrate to interfere with the motion of the sputtered atoms, increasing the mean-free-path.

Magnetically enhanced sputtering, in which a magnetic field is applied in the sputtering chamber perpendicularly to the electric field, further reduces the pressures needed to sputter and thereby increases the mean-free-path. This is because the magnetic field deflects electrons into following spiral-like paths with greater distances to travel to reach the anode. The longer path increases the probability of collision with the gas atoms. These collisions produce the gas ions which dislodge the sputter target atoms, hence an increase in probability of gas collision increases the sputtering rate. Another feature of magnetic enhancement is that electrons are confined to the ionized gas plasma and produce less heating of the substrate by electron bombardment. This feature is a benefit when it is desired to use substrates with comparatively low melting points.

Currently used dielectric materials are deposited by several methods which have disadvantages. Evaporation deposition requires much lower vacuum pressures than the sputtering techniques used to deposit the RE-TM alloy films; uniform film deposition over a wide area is difficult; and the deposition rate is difficult to control because it is an exponential function of evaporation boat temperature. Radio frequency (RF) sputtering produces excessive heat at the substrate, making some inexpensive plastic substrates unusable; and the RF signals can interfere with computer controlled manufacturing processes.

Reactive sputter deposition requires the addition of a reactive gas to the chamber, which can contaminate the other deposition processes; and the gas may react at the sputter target surface, forming a nonconductive film which interferes with the sputtering. This reaction at the target surface occurs because relatively high partial pressures eg. 0.13Pa (10⁻³ torr) of the reactive gas are required in the sputtering chamber to cause the formation of the dielectric film. If the concentration is too low, a film which is non-transparent is formed.

The hydrogenated silicon carbide dielectric films of this invention were reduced to practice by direct current (DC) magnetron sputtering in the presence of a very small concentration of a reactive gas, i.e., water vapor, and little or no contamination of the sputter target surface was observed. This is believed to be due to the use of very low reactive gas concentration.

DC magnetron sputtering offers superior deposition rate control and deposited film thickness when compared to evaporation techniques. Temperatures generated at the substrate are low enough to permit the use of plastic substrates. There is less electromagnetic interference with control equipment than is produced by the RF methods. Therefore, the DC magnetron sputtering process is utilised in the method of the invention and can be used to deposit an imediate dielectric layer as well as a barrier dielectric layer.

DC magnetron sputtering requires a sputtering target which is electrically conductive. Assuming a target current of 50mA/cm² and that an induced through-target voltage drop greater than 50 volts is unacceptable, a maximum target material resistance of 1000 ohm/cm² is desired. For a target thickness of 0.3 cm, the desired resistivity is approximately 3300 ohm-cm or less.

A suitable material for DC magnetron sputtering is electrically conductive silicon carbide, available from the Standard Oil Company, Structural Ceramics Division, under the trademark Hexoloy. A grade of the material, identified by this manufacturer as SG, is produced by blending approximately 95 percent SiC and 5 percent graphite powder by weight and adding suitable binders. The blended powders are extruded to form a sheet or rod, and then sintered in high temperature graphite furnaces. The final product consists of SiC grains in a matrix of electrically conductive porous graphite. The electrical conductivity at 20 degrees C is between 0.2 and 300 ohm-cm, depending upon the dopants used.

Electrically conductive silicon carbide can be used as a DC sputtering target without bonding to a backing plate. The outer portion of the material has higher carbon content, which has been found to produce sputtered films with carbon/silicon ratio strongly determined by sputtering time. A pre-sputtering procedure to clean the target is used to improve the uniformity of the films produced.

A source of hydrogen is introduced into the sputtering chamber during deposition of the dielectric film. The preferred source of hydrogen is water vapor, but molecular hydrogen and methane are suitable if appropriate pumping equipment is used. In the case of water vapor, special care must be taken to ensure that the oxygen also introduced does not contaminate the RE-TM alloy while the latter is being deposited. A suitable technique is the physical isolation of the sputtering chambers used for the dielectric film and the RE-TM alloy from each other, such as by movable doors. The use of a "dynamic buffer" technique commonly used in reactive sputtering is also suitable. This technique places an isolation region of relatively high vacuum between the sputtering chambers. Water vapor passing from the dielectric sputtering chamber must pass into the isolation region before reaching the RE-TM sputtering chamber. The higher vacuum in the isolation region removes the water vapor.

The preferred method of minimizing oxygen contamination is the use of trace amounts of water vapor at very low vapor pressures. In the reduction to practive of this invention, the water vapor was present in the DC magnetron chamber at the base vacuum pressure of 2.67x10⁻⁵Pa (2x10⁻⁷ torr) or less, prior to filling the chamber with argon.

The thin films produced with a silicon carbide and graphite sputter target in the presence of hydrogen have the chemical formula (SiCₓ)_{1-y}H_{y}, in which x is greater than 1, and y is greater than zero. The hydrogenated carbon-rich silicon carbide films also have detectable concentrations of other elements, which are believed to be due to the binders used in a particular blend of powders.

Generally speaking, the more electrically conductive the SiC/graphite sputtering target is, the higher the value of x in the deposited film. Excessively conductive blends produce films with large x values (e.g., 3.0 or more), but they lose transparency and thus are less acceptable for magneto optic media applications. Preferably the carbon content is x greater than 1.2.

It is also desirable to perform the DC magnetron sputtering at low noble gas partial pressures, typically 1.33Pa (0.01 torr) or less. The resulting media are expected to show less decrease in coercivity with time (a measure of media storage stability) than media produced by sputtering at higher pressures, as is observed in media having non-hydrogenated layers.

Based on similar hydrogenated films known in the art, we believe that acceptable films of this invention may have y values of 0.7 or less. Acceptable water vapor pressures are about 1.33x10⁻³Pa (1x10⁻⁵torr) or less.

The relative thicknesses of the magnetizable amorphous magneto optic film and the transparent dielectric intermediate layer in the trilayer construction, and the intermediate dielectric and barrier dielectric layers and magnetizable amorphous film of the quadrilayer construction, can be selected to yield a magneto optic angle of rotation exceeding that of the medium without the added layers.

### Example I

To establish the effect of hydrogenation on the optical properties of carbon-rich silicon carbide, (SiCₓ)_{1-y}H_{y} layers were deposited at 0.107Pa (8x10⁻⁴ torr) onto glass slides, using the Hexoloy SG silicon carbide/graphite material and water vapor as described above.

To determine the composition of the films, similarly produced films were analyzed by secondary ion mass spectroscopy (SIMS) for chemical content. A non-hydrogenated silicon carbide film (Run 670) had a negligible hydrogen content (y less than 0.01), while a hydrogenated silicon carbide film (Run 754) had a hydrogen content of approximately 6 atomic percent, or y=0.15. The SIMS analysis showed that both films had similar silicon and carbon concentrations, which in the case of Run 670 was known to be about x-1.57.

Then, reflection and transmission coefficient measurements of a 15 nanometre thick layer (designated Run 749) of hydrogenated carbon-rich silicon carbide were used to calculate values of the index of refraction and the optical extinction coefficient of the film, as a function of light wavelength. Measurements and calculations were made both for light incident upon the glass substrates and for light incident upon the dielectric films. For magneto optic media, the desired values for a dielectric film are an index of refraction between 2.0 and 3.0, and an optical extinction coefficient of 0.15 or less.

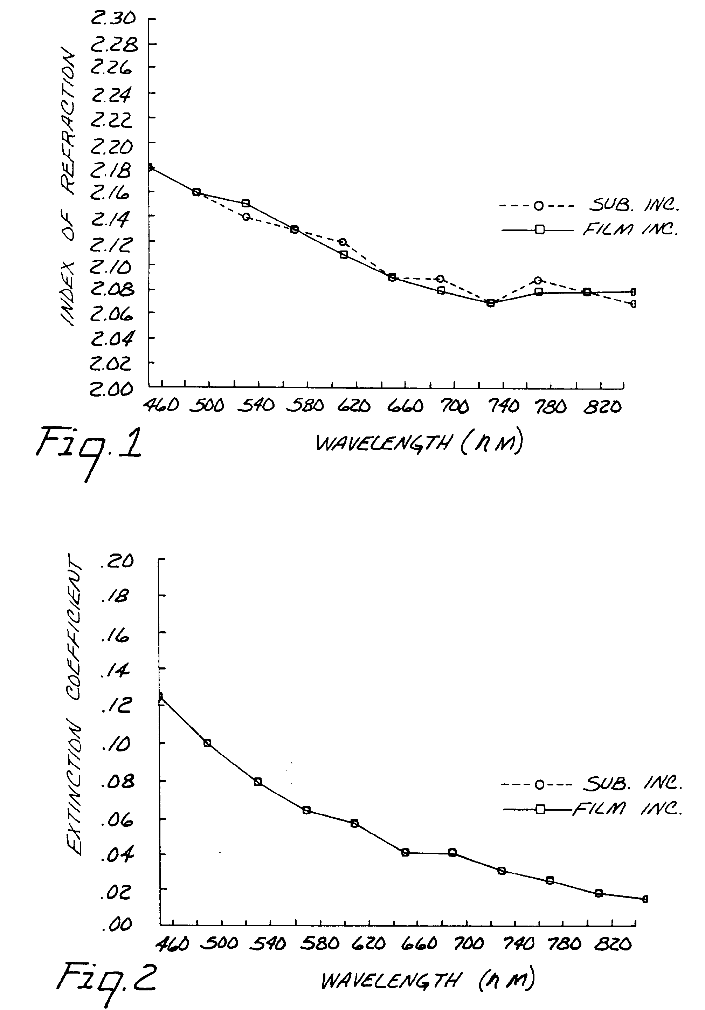

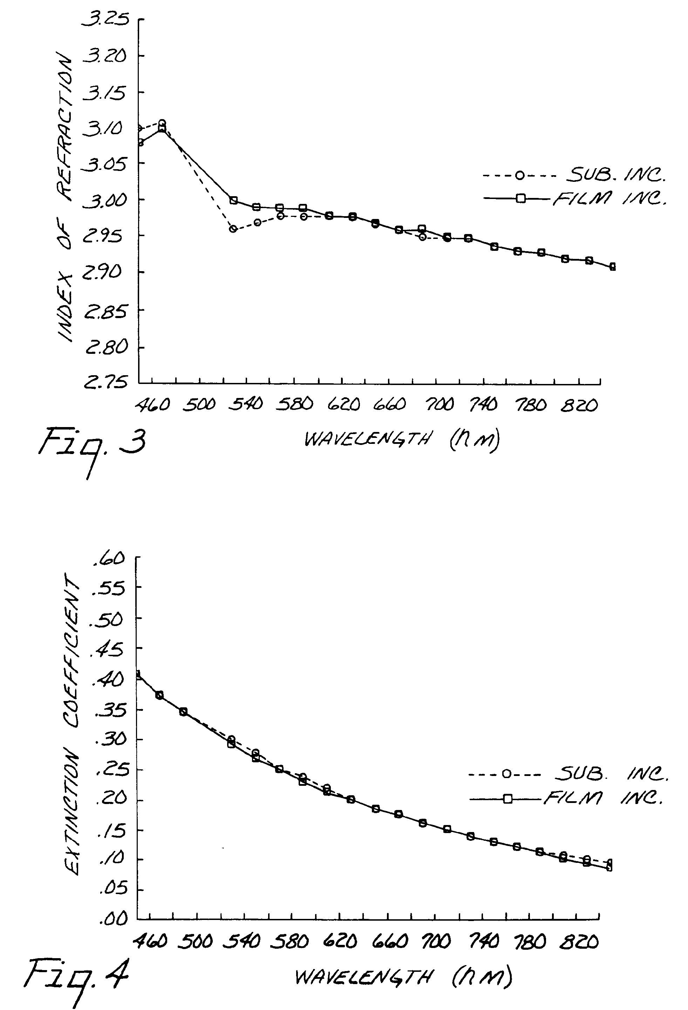

Figures 1 and 2 show that the dielectric film of Run 749 has the desired values over a wavelength range of 450 to 850 nanometers. The index of refraction varies inversely with wavelength, from about 2.08 at 850nm to about 2.10 at 650nm to 2.18 at 450nm. The optical extinction coefficient also varies inversely, from 0.02 at 850nm to 0.04 at 650nm to about 0.12 at 450nm. By contrast, Figures 3 and 4 show the results of similar measurements and calculations for a non-hydrogenated carbon-rich silicon carbide film (SiCₓ, x=1.57, designated Run 506) over the same wavelength range. The index of refraction varies from a value of about 2.95 at 850nm, to about 3.90 at 650nm, and about 3.10 at 450nm. The optical extinction coefficient increases from 0.10 at 850nm to 0.20 at 650nm and 0.40 at 450nm.

Thus, the hydrogenated carbon-rich silicon carbide dielectric films of this invention are preferred for magneto optic medium applications employing light having a wavelength between 450 and 850 nanometers.

## Claims

1. A magneto optic recording medium comprising a substrate and an amorphous magnetizable rare earth-transition metal alloy layer having a transparent dielectric layer on at least one side, in which the dielectric layer comprises hydrogenated silicon carbide of the formula (SiCₓ)_{1-y}H_{y}, in which x is greater than 1.0 and y is greater than zero.

2. A magneto optic recording medium according to claim 1 in which the rare earth-transition metal alloy layer comprises iron, terbium and cobalt.

3. A magneto optic recording medium according to claim 1 or claim 2 in which y is less than 0.7.

4. A magneto optic recording medium according to any preceding claim in which the index of refraction of the dielectric layer is greater than or equal to 2.0 and less than or equal to 3.0 at wavelengths between 450 and 850 nanometres.

5. A magneto optic recording medium according to any preceding claim in which the optical extinction coefficient of the dielectric layer is less than 0.15 at wavelengths between 450 and 850 nanometres.

6. A magneto optic recording medium according to any preceding claim further comprising a reflective surface located to reflect light through the magnetizable alloy layer.

7. A method of making a magneto optic recording medium comprising a substrate, an amorphous magnetizable rare earth-transition metal alloy layer, and a transparent dielectric layer on at least one side of the rare earth-transition metal alloy layer, the method comprising the steps of:
(A) providing the substrate;
(B) depositing the amorphous magnetizable rare earth-transition metal alloy layer by any means known to yield a layer effective in producing a magneto optic effect;
(C) providing an electrically conductive sputtering target comprising silicon and carbon; and
(D) depositing, from the target provided, by DC magnetron sputtering, a dielectric layer comprising hydrogenated silicon carbide of the formula (SiCₓ)_{1-y}Hy, in which x is greater than 1.0 and y is greater than zero.

8. A method according to claim 7 in which the DC magnetron sputtering is performed at a noble gas partial pressure less than 1.33 mPa (0.01 torr).

9. A method according to claim 7 or claim 8 in which the DC magnetron sputtering target comprises silicon carbide and graphite and step (C) further comprises introducing a source of hydrogen into the sputtering chamber.

10. A method according to claim 9 in which the source of hydrogen is water vapor.

11. A method according to claim 10 in which the water vapor is introduced at a partial pressure of less than 1.33 mPa (1x10⁻⁵ torr).

12. A method according to any of claims 8 to 11 in which the magneto optic recording medium further comprises a reflective surface located to reflect light through the magnetizable alloy layer, and the method further comprises the step of:
(E) producing the reflective surface by any means known to yield a layer effective in reflecting polarized light transmitted through a rare earth-transition metal alloy.

## Patentansprüche

1. Magnetooptischer Aufzeichnungsträger mit einem Substrat und einer amorphen, magnetisierbaren Seltenerd-Übergangsmetall-Legierungsschicht mit einer transparenten, dielektrischen Schicht auf mindestens einer Seite, wobei die dielektrische Schicht hydriertes Siliziumkarbid der Formel (SiCₓ)_{1-y}H_{y} umfaßt, wobei x größer ist als 1,0 und wobei y größer ist als Null.

2. Magnetooptischer Aufzeichnungsträger nach Anspruch 1, wobei die Seltenerd-Übergangsmetall-Legierungsschicht Eisen, Terbium und Kobalt umfaßt.

3. Magnetooptischer Aufzeichnungsträger nach Anspruch 1 oder 2, wobei y niedriger ist als 0,7.

4. Magnetooptischer Aufzeichnungsträger nach einem der vorstehenden Ansprüche, wobei der Brechungsindex der dielektrischen Schicht bei Wellenlängen zwischen 450 und 850 Nanometern größer oder gleich 2,0 und kleiner oder gleich 3,0 ist.

5. Magnetooptischer Aufzeichnungsträger nach einem der vorstehenden Ansprüche, wobei der optische Extinktionskoeffizient der dielektrischen Schicht bei Wellenlängen zwischen 450 und 850 Nanometern niedriger als 0,15 ist.

6. Magnetooptischer Aufzeichnungsträger nach einem der vorstehenden Ansprüche, ferner mit einer reflektierenden Oberfläche, die so angeordnet ist, daß sie durch die magnetisierbare Legierungsschicht Licht reflektiert.

7. Verfahren zur Herstellung eines magnetooptischen Aufzeichnungsträgers mit einem Substrat und einer amorphen, magnetisierbaren Seltenerd-Übergangsmetall-Legierungsschicht mit einer transparenten, dielektrischen Schicht auf mindestens einer Seite der Seltenerd-Übergangsmetall-Legierungsschicht, wobei das Verfahren folgende Schritte umfaßt:
(A) Bereitstellung des Substrats;
(B) Ablagerung der amorphen, magnetisierbaren Seltenerd-Übergangsmetall-Legierungsschicht durch ein bekanntes Verfahren, so daß sich eine Schicht ergibt, die wirksam einen magnetooptischen Effekt erzeugt;
(C) Bereitstellung eines elektrisch leitfähigen Zerstäubungstargets, das Silizium und Kohlenstoff umfaßt; und
(D) Ablagerung einer dieelektrischen Schicht mit hydriertem Siliziumkarbid der Formel (SiCₓ)_{1-y}H_{y}, wobei x größer ist als 1,0 und wobei y größer ist als Null, wobei die Ablagerung von dem vorgesehenen Target durch Gleichstrom-Magnetronzerstäubung erfolgt.

8. Verfahren nach Anspruch 7, wobei die Gleichstrom-Magnetronzerstäubung bei einem Edelgaspartialdruck von weniger als 1,33 mPa (0,01 Torr) durchgeführt wird.

9. Verfahren nach Anspruch 7 oder 8, wobei das Gleichstrom-Magnetronzerstäubungstarget Siliziumkarbid und Graphit umfaßt, und wobei der Schritt (C) ferner die Einführung einer Wasserstoffquelle in die Zerstäubungskammer umfaßt.

10. Verfahren nach Anspruch 9, wobei es sich bei der Wasserstoffquelle um Wasserdampf handelt.

11. Verfahren nach Anspruch 10, wobei der Wasserdampf mit einem Partialdruck von weniger als 1,33 mPa 1x10⁻⁵ Torr) eingeführt wird.

12. Verfahren nach einem der Ansprüche 8 bis 11, wobei der magnetooptische Aufzeichnungsträger ferner eine reflektierende Oberfläche umfaßt, die so angeordnet ist, daß sie Licht durch die magnetisierbare Legierungsschicht reflektiert, und wobei das Verfahren ferner den folgenden Schritt umfaßt:
(E) Erzeugung der reflektierenden Oberfläche durch ein bekanntes Verfahren, so daß sich eine Schicht ergibt, welche durch eine Seltenerd-Übergangsmetall-Legierung wirksam polarisiertes Licht reflektiert.

## Revendications

1. Support d'enregistrement magnéto-optique comprenant un substrat et une couche d'alliage amorphe de métal de transition-de terre rare magnétisable pourvu d'une couche diélectrique transparente sur au moins une face, dans lequel la couche diélectrique comprend du carbure de silicium hydrogéné de formule (SICₓ)_{1-y}H_{y}, dans laquelle x est supérieur à 1,0 et y est supérieur à zéro.

2. Support d'enregistrement magnéto-optique selon la revendication 1 dans lequel la couche d'alliage de métal de transition-de terre rare comprend le fer, le terbium et le cobalt.

3. Support d'enregistrement magnéto-optique selon la revendication 1 ou la revendication 2 dans lequel y est inférieur à 0,7.

4. Support d'enregistrement magnéto-optique selon l'une quelconque des revendications précédentes dans lequel l'indice de réfraction de la couche diélectrique est supérieur ou égal à 2,0 et inférieur ou égal à 3,0 pour des longueurs d'ondes comprises entre 450 et 850 nanomètres.

5. Support d'enregistrement magnéto-optique selon l'une quelconque des revendications précédentes dans lequel le coefficient d'extinction optique de la couche diélectrique est inférieur à 0,15 pour des longueurs d'ondes situées entre 450 et 850 nanomètres.

6. Support d'enregistrement magnéto-optique selon l'une quelconque des revendications précédentes comprenant en outre une surface réfléchissante située de façon à réfléchir la lumière à travers la couche d'alliage magnétisable.

7. Procédé de réalisation d'un support d'enregistrement magnéto-optique comprenant un substrat, une couche d'alliage de métal de transition-de terre rare magnétisable amorphe, et une couche diélectrique transparente sur au moins une face de la couche d'alliage de métal de transition-de terre rare, le procédé comprenant les étapes de:
(A) fourniture du substrat;
(B) dépôt de la couche d'alliage amorphe de métal de transition-de terre rare magnétisable par tout moyen connu de façon à produire une couche efficace pour la production de l'effet magnéto-optique;
(C) fourniture d'une cible de pulvérisation électriquement conductrice comprenant du silicium et du carbone; et
(D) dépôt à partir de la cible fournie, par pulvérisation à courant continu par magnétron, d'une couche diélectrique comprenant du carbure de silicium hydrogéné de formule (SiCₓ)_{1-y}H_{y}, dans laquelle x est supérieur à 1,0 et y est supérieur à zéro.

8. Procédé selon la revendication 7 dans lequel la pulvérisation à courant continu par magnétron est réalisée sous une pression partielle de gaz noble inférieure à 1,33 mPa (0,01 torr).

9. Procédé selon la revendication 7 ou la revendication 8 dans lequel la cible de pulvérisation à courant continu par magnétron comprend du carbure de silicium et du graphite et dans lequel l'étape (C) comprend en outre l'introduction d'une source d'hydrogène dans la chambre de pulvérisation.

10. Procédé selon la revendication 9 dans lequel la source d'hydrogène est de la vapeur d'eau.

11. Procédé selon la revendication 10 dans lequel la vapeur d'eau est introduite à une pression partielle de moins de 1,33 mPa (1x10⁻⁵ torr).

12. Procédé selon l'une quelconque des revendications 8 à 11 dans lequel le support d'enregistrement magnéto-optique comprend en outre une surface réfléchissante disposée de façon à réfléchir la lumière à travers la couche d'alliage magnétisable, et le procédé comprenant en outre l'étape de:
(E) Production de la surface réfléchissante par tout moyen connu de façon à obtenir une couche efficace pour réfléchir la lumière polarisée transmise à travers l'alliage de métal de transition-de terre rare.
